# EUROPÄISCHE PATENTSCHRIFT

(11) **EP 2 034 084 B1**
(45) Veröffentlichungstag und Bekanntmachung des Hinweises auf die Patenterteilung: **27.02.2013**
(21) Anmeldenummer: 08020691.5
(22) Anmeldetag: 06.11.2007
(51) Int. Cl.: D06F 58/20, D06F 58/28

(54) **Wäschetrockner mit Zusatzwärmetauscher**
Clothes drier with auxiliary heat exchanger
Sèche-linge doté d'un échangeur thermique additionnel

(30) Priorität: 06.11.2006 CH 17552006; 16.01.2007 DE 202007000648 U
(43) Veröffentlichungstag der Anmeldung: 11.03.2009
(62) Teilanmeldung aus: 07021533.0
(73) Patentinhaber: V-Zug AG, CH-6301 Zug (CH)
(72) Erfinder: Kerschdorfer, Markus, 5643 Sins (CH)
(74) Vertreter: Sutter, Kurt

(56) Entgegenhaltungen:
- EP-A- 1 209 277
- DE-A1- 4 306 217
- DE-A1- 4 409 607
- DE-A1- 4 434 205
- DE-A1- 19 638 865
- DE-A1- 19 853 234
- JP-A- 2004 239 549

## Beschreibung

Die Erfindung betrifft einen Wäschetrockner gemäss Oberbegriff von Anspruch 1.

Wäschetrockner dieser Art, bei denen zum Abkühlen und Heizen der Kondensator und der Verdampfer eines Wärmepumpenkreislaufs eingesetzt werden, zeichnen sich durch eine hohe Effizienz aus. Es zeigt sich jedoch, dass ihnen Wärme entzogen werden muss, da ansonsten die Temperatur im Wärmepumpenkreislauf auf zu hohe Werte ansteigen kann.

In DE 198 53 234 wird deshalb vorgeschlagen, zwischen Verdampfer und Kompressor einen Zusatzwärmetauscher vorzusehen, um so den System Wärme zu entziehen.

In DE 44 34 205 und DE 44 09 607 werden Geräte beschrieben, bei denen u.a. ein zusätzlicher Wärmetauscher zwischen dem Kondensator und dem Drosselorgan des Wärmepumpenkreislaufs angeordnet ist. Ein Gebläse dient der Kühlung des zusätzlichen Wärmetauschers.

Aufgabe der vorliegenden Erfindung ist die Verbesserung eines solchen Geräts. Diese Aufgabe wird vom Gerät nach Anspruch 1 gelöst.

Anspruchsgemäss ist der Zusatzwärmetauscher also im Wärmepumpenkreislauf zwischen dem Kondensator und dem Drosselorgan angeordnet. An dieser Stelle ist die Temperatur des Mediums relativ hoch, was die Effizienz des Zusatzwärmetauschers verbessert. Zudem wird durch den Zusatzwärmetauscher das Temperaturgefälle zwischen Verdampfer und Kondensator erhöht, was es erlaubt, der Prozessluft mehr Wasser zu entziehen.

Der Wäschetrockner ist dadurch gekennzeichnet, dass die vom Gebläse bewegte Umgebungsluft zuerst durch den Zusatzwärmetauscher und dann um den Kompressor geführt ist.

Weitere bevorzugte Ausführungen des Wäschetrockners werden in den abhängigen Ansprüchen sowie in der nun folgenden Beschreibung einer bevorzugten Ausführung der Erfindung dargelegt. Die Beschreibung nimmt Bezug auf die Figuren, welche Folgendes zeigen:
Fig. 1 ein Blockdiagramm der wichtigsten Komponenten des Wäschetrockners,
Fig. 2 eine Ansicht des Wäschetrockners von vorne, wobei die Seitenwände und die Türe, sowie einige weitere Teile des Geräts der Klarheit halber nicht dargestellt sind,
Fig. 3 das Gerät nach Fig. 2 von hinten,
Fig. 4 eine Ansicht der Komponenten im Bodenbereich des Geräts,
Fig. 5 die Komponenten nach Fig. 4 im Wesentlichen von oben gesehen und
Fig. 6 den Verlauf der Lüfterleistung und der Temperaturen in einer bevorzugten Variante der Erfindung.

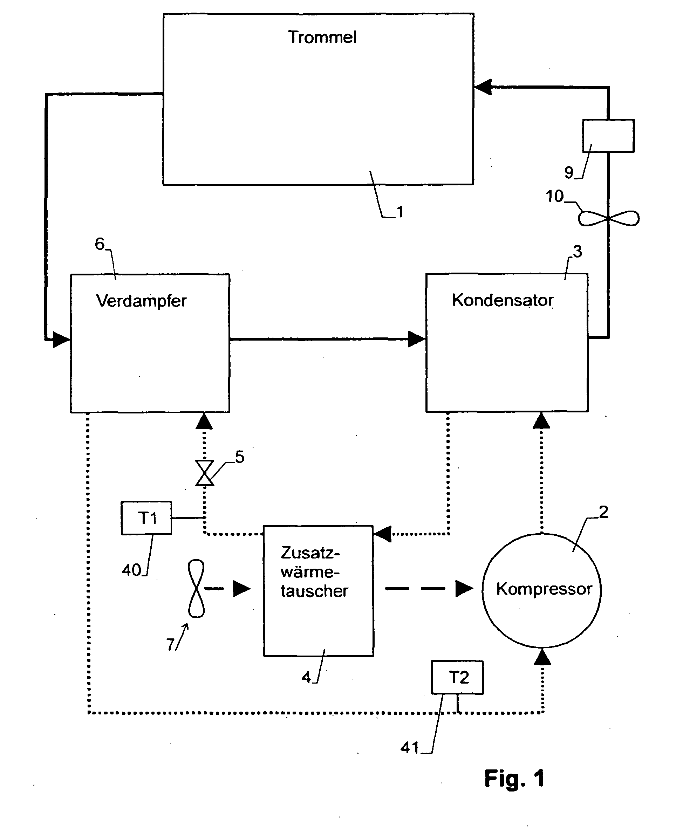

Zunächst wird der funktionelle Aufbau des Wäschetrockners anhand von Fig. 1 beschrieben.

Das Gerät besitzt eine Trommel 1 zur Aufnahme der zu trocknenden Wäsche. Es ist ein Prozesskreislauf vorgesehen (welcher in Fig. 1 mit durchgezogenen Linien dargestellt ist), in welchem erwärmte Prozessluft durch die Trommel 1 geleitet, sodann abgekühlt und danach wieder aufgeheizt und zurück in die Trommel 1 geführt wird.

Im Prozesskreislauf, insbesondere vor der Trommel 1, kann eine optionale elektrische Zusatzheizung (Startheizung) 9 vorgesehen sein, welche es erlaubt, der Prozessluft gezielt Wärme zuzuführen, z.B. beim Starten des Geräts, oder sie kann verwendet werden, um das Temperaturniveau im Prozesskreislauf allgemein anzuheben. Ein Gebläse 10 dient zum Umpumpen der Prozessluft.

Weiter ist ein Wärmepumpenkreislauf vorgesehen (wobei der Pfad des vom Wärmepumpenkreislauf geförderten Mediums in Fig. 1 mit gepunkteten Linien dargestellt ist). Das Medium wird von einem Kompressor 2 zu einem Kondensator 3 gefördert, von dort zu einem Zusatzwärmetauscher 4, dann über ein Drosselorgan 5, z.B. in Form einer Kapillaren oder eines Expansionsventils, zu einem Verdampfer 6 und dann wieder zurück zum Kompressor 2. Der Verdampfer 6 dient dazu, die Prozessluft abzukühlen und ihr auf diese Weise Wasser zu entziehen, während der Kondensator 3 dazu dient, die Prozessluft wieder zu erwärmen, so dass sie neues Wasser aufnehmen kann.

Wie aus Fig. 1 weiter ersichtlich, ist ein Gebläse 7 vorgesehen, mit welchem Umgebungsluft über den Zusatzwärmetauscher 4 geführt wird, um diesen zu kühlen.

Wie eingangs erwähnt, dient der Zusatzwärmetauscher 4 dazu, dem Wärmepumpenkreislauf und somit dem ganzen System Wärme zu entziehen. Vorzugsweise wird die Menge der entzogenen Wärme abhängig von der Temperatur im Wärmepumpenkreislauf (und/oder abhängig von der Temperatur im Prozesskreislauf) gesteuert, z.B. indem das Gebläse 7 mit grösserer Leistung betrieben wird, wenn die Temperatur ansteigt. Beispielsweise kann das Gebläse erst dann eingeschaltet werden, wenn die Temperatur einen vorgegebenen Schwellwert überschreitet. Vorzugsweise wird jedoch die Leistung des Gebläses 7 bei zunehmender Temperatur kontinuierlich erhöht.

Die temperaturabhängige Ansteuerung des Gebläses 7 erlaubt es, z.B. beim Anfahren des Wäschetrockners dem Prozesskreislauf sehr schnell Energie zuzuführen, so dass die Prozesstemperatur rasch erreicht wird, wonach aber im Normalbetrieb ein Überhitzen des Wärmepumpenkreislaufs verhindert wird.

Vorzugsweise wird die Temperatur des im Wärmepumpenkreislauf laufenden Mediums nach dem Zusatzwärmetauscher 4 und vor dem Drosselorgan 5 zur Steuerung des Gebläses 7 verwendet.

Zum Ansteuern des Gebläses 7 besitzt das Gerät eine entsprechend ausgestaltete Steuerung und geeignete Temperatursensoren 40, 41. Vorzugsweise wird zumindest die Temperatur T1 am Eingang des Drosselorgans 5 gemessen.

Die vorliegende Erfindung kann unabhängig von dem im Wärmepumpenkreislauf eingesetzten Medium eingesetzt werden. Das im Folgenden beschriebene Ausführungsbeispiel arbeitet z.B. mit R134a, das gleiche Prinzip kann bei entsprechender Dimensionierung aber z.B. auch bei einem CO₂-Kreislauf eingesetzt werden.

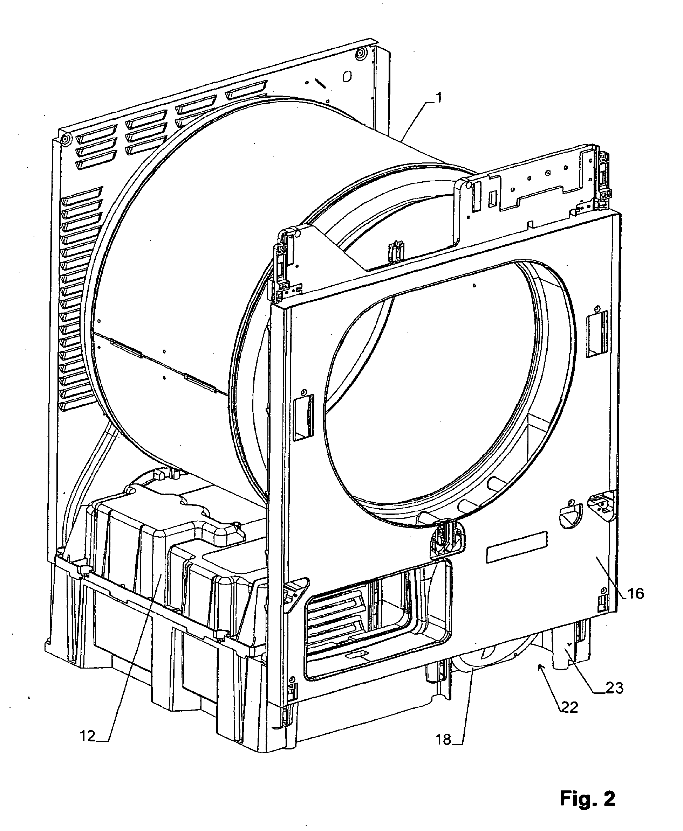

Bei der in Fig. 2 bis 5 gezeigten Ausführung handelt es sich um einen Wäschetrockner, der eine von vorne beschickbare Trommel 1 besitzt. Es ist ein (in den Figuren nicht dargestellter) Antrieb vorgesehen, mit welchem die Trommel um eine horizontale Drehachse rotiert werden kann.

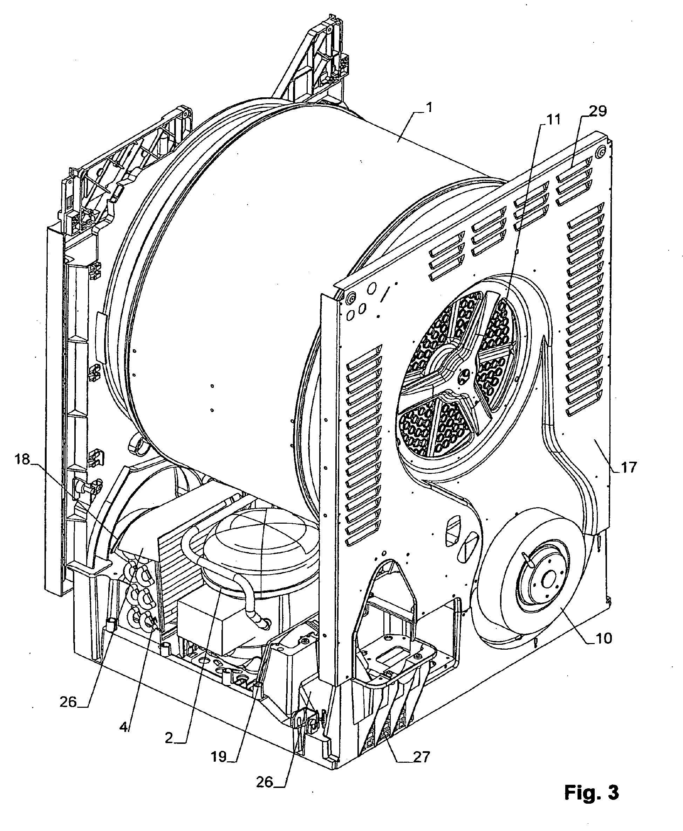

Die Prozessluft tritt vom Trommelinneren in bekannter Weise durch ein Sieb oder mehrere Siebe in der (nicht dargestellten) Türe des Geräts und/oder nach der Türe und durchläuft sodann den Verdampfer 6, den Kondensator 3, das Gebläse 10 (siehe Fig. 3), die optionale Zusatzheizung (Startheizung) 9 und wird durch Löcher 11 in der Rückwand der Trommel 1 wieder zurück in die Trommel geführt. Zum Führen der Prozessluft im Bereich des Verdampfers 6 und des Kondensators 3 sind diese in einem Kanal angeordnet, der von einem Kanalgehäuse 12 gebildet wird, siehe Fig. 2.

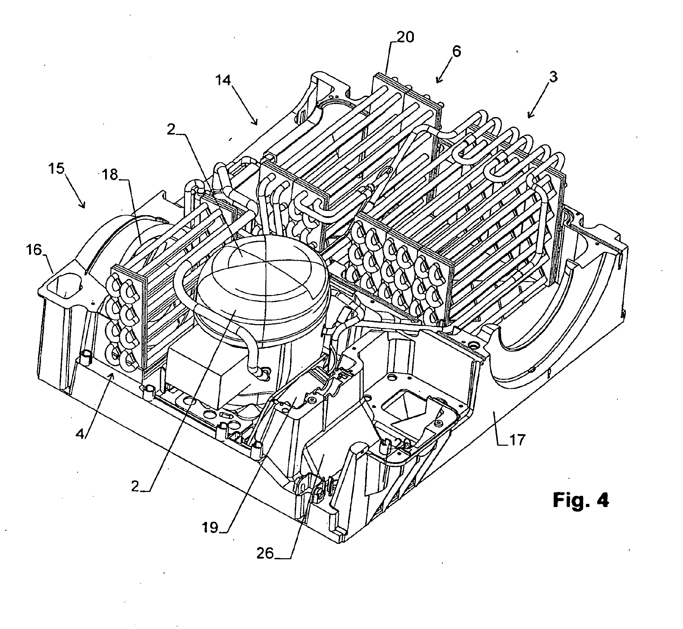

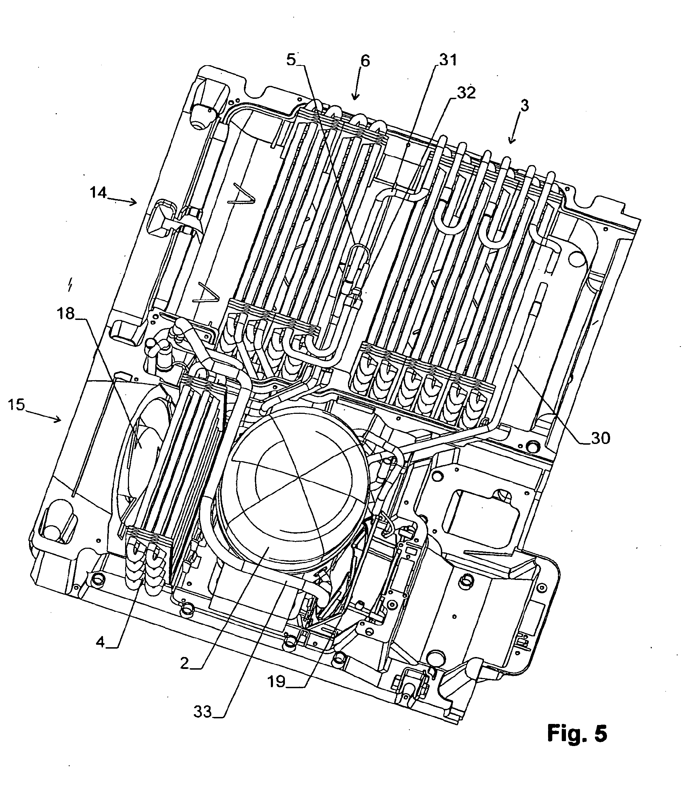

Der Wärmepumpenkreislauf ist im Bodenbereich des Geräts angeordnet und ist am besten aus Fig. 4 und 5 ersichtlich. Der Bodenbereich ist in zwei nebeneinander liegende Bereiche 14 und 15 aufgeteilt, von denen sich jeder von der Vorderseite 16 des Geräts zu dessen Rückseite 17 erstreckt. Im ersten Bereich 14 sind der Kondensator 3 und der Verdampfer 6 angeordnet, im zweiten Bereich 15 der Zusatzwärmetauscher 4, der Kompressor 2 sowie das aus zwei Lüftern 18, 19 bestehende Gebläse 7.

Der Zusatzwärmetauscher 4, der Verdampfer 6 und der Kondensator 3 können jeweils aus identischen Modulen aufgebaut sein. Jedes Modul besitzt ein mäanderförmig geführtes Rohr, das in thermischem Kontakt mit einer Vielzahl von Wärmetauscherblechen 20 steht. Von den Wärmetauscherblechen sind in den Figuren jeweils nur die äussersten dargestellt. Die Prozessluft bzw. die Umgebungsluft wird durch die Abstände zwischen den Wärmetauscherblechen geführt.

In der gezeigten Ausführung besteht der Kondensator 3 aus drei Modulen, der Verdampfer 6 aus zwei Modulen und der Zusatzwärmetauscher 4 aus nur einem Modul. Die Zahl der Module kann jedoch den jeweiligen Anforderungen angepasst werden. Insbesondere kann der Zusatzwärmetauscher 4 auch zwei oder mehr Module umfassen, welche vom Medium des Wärmepumpenkreislaufs sequentiell oder parallel durchlaufen werden können.

Wie erwähnt, besteht das Gebläse 7 im vorliegenden Ausführungsbeispiel aus zwei Lüftern 18, 19. Die Umgebungsluft wird vom ersten Lüfter 18 angesaugt, und zwar über eine Ansaugöffnung 22 im Sockel 23 an der Vorderseite des Geräts (siehe Fig. 2). Vom ersten Lüfter 18 gelangt die Luft zum Zusatzwärmetauscher 4, sodann zum Kompressor 2 und dann zum zweiten Lüfter 19. Ein über dem Zusatzwärmetauscher 4 angeordnetes Luftleit-Formteil 25 (siehe Fig. 3) dient dabei dazu, die Luft im Bereich des Zusatzwärmetauschers 4 zu führen. Ebenso ist nach dem zweiten Lüfter 19 eine Luftführung 26 vorgesehen, welche die Luft unter dem (nicht dargestellten) hinter dem zweiten Lüfter 19 angeordneten Antrieb der Trommel 1 hindurch zu Entlüftungsöffnungen 27 an der Rückseite 17 des Geräts führt. Weitere Entlüftungsöffnungen können im Boden des Geräts vorgesehen sein.

Indem die Umgebungsluft über den Kompressor 2 geführt wird, kann dieser auch gekühlt werden. Vorzugsweise wird die kalte Umgebungsluft zuerst aber über den Zusatzwärmetauscher 4 geführt, da über diesen eine grössere Wärmemenge abgeführt werden kann.

Die Umgebungsluft durchströmt den Zusatzwärmetauscher 4 von vorne nach hinten, während das Medium des Wärmetauscherkreislaufs zuerst die hintere Seite des Zusatzwärmetauschers 4 durchläuft und dann erst die vordere Seite, so dass der Zusatzwärmetauscher 4 auf der hinteren Seite heisser ist als auf der vorderen Seite. Durch diese Gegenstromanordnung kann die Effizienz der Kühlung verbessert werden.

Wie insbesondere aus Fig. 5 ersichtlich, läuft das Medium des Wärmepumpenkreislaufs vom Kompressor 2 über ein Rohr 30 zum Kondensator 3 und von dort über ein Rohr 31 zum Zusatzwärmetauscher 4. Vom Zusatzwärmetauscher läuft es über das als Kapillare ausgestaltete Drosselorgan 5 zu einer Verzweigung 32, von wo es in der vorliegenden Ausführung parallel in zwei Pfaden durch den Verdampfer 6 geführt wird. Vom Verdampfer 6 läuft das Medium über ein Rohr 33 wieder zurück zum Kompressor 2.

In der soweit gezeigten Ausführung wird die Umgebungsluft durch eine Öffnung 22 an der Vorderseite 16 des Geräts angesaugt, läuft sodann durch den ersten Lüfter 18, dann den Zusatzwärmetauscher 4, dann den Kompressor 2 und schliesslich durch den zweiten Lüfter 19. Das Ansaugen der Luft von der Vorderseite 16 her hat den Vorteil, dass die angesaugte Luft relativ kühl ist, so dass eine gute Kühlung des Zusatzwärmetauschers 4 erreicht werden kann. Denkbar ist jedoch an sich auch ein Ansaugen von Umgebungsluft von der Rückseite und/oder vom Boden des Geräts her, oder die Umgebungsluft kann an sich auch durch Öffnungen an der Seitenwand des Geräts angesaugt werden, soweit dort ausreichend Abstand zu benachbarten Wänden oder anderen Geräten gewährleistet ist.

Im gezeigten Ausführungsbeispiel ist der erste Lüfter 18 grösser und fördert mehr Luft als der zweite Lüfter 19. Dies führt dazu, dass ein Teil der Luft nicht über den zweiten Lüfter 19 zurück nach aussen geht, sondern das Gerät über Lüftungsöffnungen 29 im oberen Teil der Rückwand nach aussen tritt. Auf ihrem Weg zu den Lüftungsöffnungen 29 kann diese Luft zusätzlich weitere Geräteteile kühlen, so z.B. die Trommel 1.

Durch die Verwendung zweier Lüfter 18, 19 jeweils am Eingang und am Ausgang des Wegs der Umgebungsluft wird diese auf einen definierten Pfad gezwungen, so dass sie möglichst nur jene Teile des Geräts kühlt, die auch einer Kühlung bedürfen. Denkbar ist jedoch auch die Verwendung nur eines Lüfters, wobei in diesem Fall vorzugsweise weitere Führungsmittel zum Führen der Umgebungsluft durch das Gerät vorgesehen sein können. Ausserdem können der bzw. die Lüfter auch an anderen Stellen des Pfades der Umgebungsluft vorgesehen sein, z.B. zwischen dem Zusatzwärmetauscher 4 und dem Kompressor 2.

Im oben diskutierten Ausführungsbeispiel diente der zweite Lüfter 19 dazu, Luft vom Kompressor 2 her wieder nach aussen zu blasen. In einer weiteren bevorzugten Ausführung wird der zweite Lüfter 19 jedoch so betrieben, dass auch er Umgebungsluft in das Geräteinnere bläst. Dies hat den Vorteil, dass der Kompressor 2 von zwei einander ungefähr gegenüber liegenden Seiten angeblasen und somit besser gekühlt wird. Die Luft von den zwei Lüftern 18, 19 kann in diesem Fall zusätzlich auch weitere Geräteteile kühlen, z.B. Trommel 1, und sodann z.B. durch die Lüftungsöffnungen 29 im oberen Teil der Rückwand wieder austreten.

Vorzugsweise werden beide Lüfter 18, 19 abhängig von der Temperatur im Wärmepumpenkreislauf und/oder Prozesskreislauf gesteuert. Denkbar ist jedoch auch eine separate Steuerung abhängig von der lokalen Temperatur in den zugehörigen Gerätebereichen.

Wie bereits erwähnt, wird das Gebläse 7 vorzugsweise mit grösserer Leistung betrieben, wenn die Temperatur ansteigt. Dieser Anstieg kann stufenlos oder in Stufen erfolgen. Beispielsweise kann die Förderleistung des Gebläses abhängig von der Temperatur T1 des Mediums im Wärmepumpenkreislauf vor dem Drosselorgan gesteuert werden, z.B. entsprechend einer Tabelle wie folgt:

| Temperatur T1 | Kühlluftmenge |
|---|---|
| 64 - 65°C | 51% |
| 65 - 66°C | 72% |
| 66 - 67°C | 85% |
| 67 - 68°C | 93% |
| 68 - 69°C | 100% |

Ab einer Referenztemperatur T0 = 64 °C wird die Leistung der Lüftung 7 also erhöht. In der Tabelle ist die Kühlluftmenge in Prozent des Volumenstroms der geförderten Luftmenge relativ zur maximal von der Lüftung 7 förderbaren Luftmenge angegeben.

Um eine Steuerung dieser Art zu realisieren, kann ein Temperatursensor 40 zur Messung der Temperatur T1 vor dem Drosselorgan 5 angeordnet werden, wie dies in Fig. 1 illustriert ist.

Die obige Tabelle ist als Beispiel zu verstehen. Insbesondere können je nach maximaler Förderleistung der Lüftung 7, je nach Medium im Wärmepumpenkreislauf sowie abhängig von anderen Geräteparametern auch andere Werte verwendet werden. Die Abstufung kann auch gröber oder feiner sein, oder es kann eine kontinuierliche Abhängigkeit zwischen Förderleistung und Temperatur verwendet werden. Eine Abhängigkeit in mehreren Stufen oder eine kontinuierliche Abhängigkeit erlaubt eine feinere Regelung der Energieentnahme als eine "binäre" Ein-Aus-Regelung. Es zeigt sich, dass durch diese Massnahme die Prozessdauer um einige Minuten verkürzt werden kann.

Sinkt die Temperatur T1, so wird auch die Kühlluftmenge reduziert. Um ein zu schnelles Schalten zu vermeiden, erfolgen Stufenwechsel vorzugsweise jedoch nicht beliebig schnell, sondern z.B. höchstens einmal pro Minute.

Um eine zu hohe Feuchtigkeit im Gehäuse des Geräts zu vermeiden, wie sie z.B. aufgrund von Leckstellen im Prozessluftkreislauf entsteht, kann die Lüftung bzw. das Gebläse nach Start des Trocknungsprogramms mit reduzierter Leistung dauernd betrieben werden. Mit anderen Worten ist der Wäschetrockner also dazu ausgestaltet, dass während dem Trocknungsprozess das Gebläse dauernd auf mindestens einer ersten Leistungsstufe betrieben werden kann, wobei die Leistungsstufe beim Ansteigen der Temperatur im Wärmepumpenkreislauf schrittweise oder kontinuierlich erhöht wird.

Wird zum Antrieb des Gebläses bzw. der Lüftung 7 ein Wechselstrommotor eingesetzt, so wird dieser vorzugsweise gepulst von einem Nulldurchgangsschalter (bzw. von einer Nulldurchgangssteuerung, d.h. einen von einer Steuerung oder Regelung angesteuerten Nulldurchgangsschalter) angetrieben. Derartige Nulldurchgangsschalter sind dem Fachmann bekannt. Sie unterbrechen und aktivieren die Versorgung des Motors im Nulldurchgang des Stroms bzw. der Spannung. Indem dem Motor die Leistung mittels eines Nulldurchgangsschalters mit Pulsen unterschiedlicher Länge bzw. mit unterschiedlichem Tastverhältnis zugeführt wird, kann sie in Stufen variiert werden. Im Gegensatz z.B. zur Ansteuerung über eine Phasenansteuerschaltung, kann durch diese Massnahme eine unerwünschte Lärmentwicklung vermieden werden. Denkbar, aber teuerer, ist auch eine Ansteuerung des Wechselspannungsmotors über Wechselspannungen unterschiedlicher Höhe, z.B. über mehrere Transformatorenabgriffe.

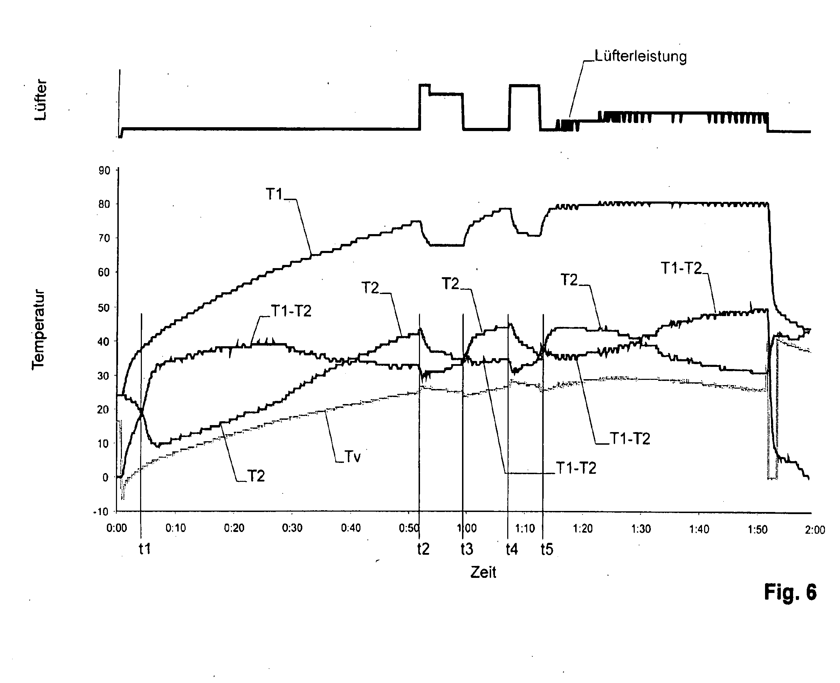

Wie bereits erwähnt, wird die Leistung des Gebläses 7 bzw. der Lüfter 18 und/oder 19 vorzugsweise abhängig von der Temperatur vor dem Drosselorgan 5 gesteuert. Eine verbesserte Variante einer solchen Steuerung ist in Fig. 6 illustriert. Diese basiert auf der Überlegung, dass es durch geeignete Steuerung der Lüfterleistung auch möglich ist, ein Auskondensieren des Mediums vor dem Kompressor 2 zu verhindern. Eine teilweise oder gar vollständige Kondensation des Mediums vor dem Kompressor kann stattfinden, falls die Temperatur T2 an diesem Ort zu tief ist und gleichzeitig ein relativ hoher Druck herrscht. Sie ist unerwünscht, da sie zu einer Beschädigung des Kompressors 2 führen kann.

Deshalb wird die Leistung des Lüfters 18 und/oder 19 möglichst so geregelt, dass dem Wärmepumpenkreislauf weniger Energie entzogen wird, falls eine Auskondensation droht. Hierzu ist, wie in Fig. 1 angedeutet, vorzugsweise ein zweiter Temperatursensor 41 vorgesehen, mit welchem die Temperatur T2 nach dem Verdampfer 6 und vor dem Kompressor 2 gemessen werden kann, insbesondere möglichst unmittelbar vor dem Kompressor 2. Die Steuerung der Lüfterleistung erfolgt in diesem Fall abhängig von den Temperaturen T1 und T2.

In einer vorteilhaften Variante erfolgt die Steuerung der Gebläseleistung abhängig von T1 sowie von der Temperaturdifferenz T1 - T2. Beispielsweise wird die Leistung der Lüftung abhängig davon gesteigert, um wieviel die Temperatur T1 über der Referenztemperatur T0 liegt. Die Referenztemperatur T0 wird abhängig vom Verlauf der Temperaturdifferenz T1 - T2 eingestellt. Es zeigt sich, dass die Temperaturdifferenz T1 - T2 ein gutes Mass zum Vergleich mit der Temperatur T2 darstellt um festzustellen, ob die Gefahr eines Auskondensierens des Mediums besteht.

In Fig. 6 wird ein typischer Trocknungsprozess einer bevorzugten Ausführung der Erfindung gezeigt. Dabei stellt die obere Kurve die Leistung des Gebläses 7 dar, während die unteren Kurven die verschiedenen Temperaturen T1, T2 und T1 - T2 darstellen, sowie die Verdampfungstemperatur Tv des Mediums zwischen Verdampfer 6 und Kompressor 2. Die Verdampfungstemperatur Tv wurde errechnet aus der Temperatur T2 sowie aus einer Messung des gemessenen Drucks des Mediums zwischen Verdampfer 6 und Kompressor 2. (Die Bestimmung der Verdampfungstemperatur Tv erfolgte im Rahmen eines Laborversuchs - im Normalbetrieb eines erfindungsgemässen Geräts braucht Tv nicht bestimmt zu werden.)

In der Ausführung nach Fig. 6 wird die Temperatur T1 mit der Referenztemperatur T0 verglichen und die Leistung des Gebläses 7 wird in der in obiger Tabelle gezeigten Art schrittweise erhöht, je mehr die Temperatur T1 den Schwellwert T0 übersteigt.

Zu Beginn des Prozesses beträgt die Referenztemperatur T0 64°C. Sobald die Differenztemperatur T1 - T2 grösser wird als die Temperatur T2, wird die Referenztemperatur T0. um einen vorgegebenen Offset von z.B. ca. 15°C erhöht, und zwar beispielsweise auf 79°C. Im Beispiel von Fig. 6 ist dies erstmals zum Zeitpunkt t1 der Fall.

Die Referenztemperatur T0 wird auf dem höheren Wert gehalten, bis die Bedingung T1 - T2 < T2 - H erfüllt wird, wobei H ein Hysteresewert von z.B. 10°C ist. Dies ist in Fig. 6 erstmals zum Zeitpunkt t2 der Fall. Dann wird die Referenztemperatur T0 wieder auf den tieferen Wert abgesenkt, wodurch die Kühlung intensiviert wird. Sobald T1 - T2 > T2 (Zeitpunkt t3), wird die Referenztemperatur T0 wieder auf den höheren Wert gesetzt. Dieser Vorgang wiederholt sich immer dann (in Fig. 6 zu den Zeitpunkten t4 und t5), wenn die Schwellwert-Bedingungen T1 - T2 < T2 - H bzw. T1 - T2 > T2 traversiert werden.

Wie aus Fig. 6 ersichtlich, liegt die Temperatur T2 immer über der Verdampfungstemperatur Tv, so dass ein Auskondensieren des Mediums verhindert bleibt. Somit kann durch den Vergleich der Differenz T1 - T2 mit der Temperatur T2 sichergestellt werden, dass keine Unterkühlung des Mediums vor dem Kompressor 2 stattfindet.

Der Ablauf gemäss Fig. 6 wird von der bereits genannten Steuerung des Geräts gesteuert, welche die Signale der Temperatursensoren T1 und T2 auswertet, die Referenztemperatur T0 ermittelt und die Leistung des Gebläses 7 steuert.

Dass es der oben erwähnte Vergleich von T1 - T2 mit T2 erlaubt, eine zu geringe Kältemittelüberhitzung zu detektieren, basiert auf heuristischen Überlegungen und experimentellen Beobachtungen. Einerseits ist T1 - T2 ein Indikator für die Verdampfungstemperatur, und andererseits ist T2 ein Mass dafür, wie nahe sich das System an einer zu geringen Kältemittelüberhitzung befindet. Die Massnahme funktioniert im vorliegenden Fall besonders gut, da T1 auf einen praktisch festen Wert geregelt wird.

Ein noch besseres Mass für die Verdampfungstemperatur könnte ermittelt werden, indem die Temperaturdifferenz zwischen T2 der Temperatur in der Mitte des Verdampfers gemessen würde, oder indem der Druck im Bereich des Verdampfers ermittelt wird. Hierzu wäre jedoch ein zusätzlicher Temperatur- oder Drucksensor notwendig. Generell kann also anstelle von T1 - T2 generell eine Temperaturdifferenz T2 - T' gemessen werden, wobei T' eine Temperatur vor oder im Verdampfer ist, im obigen Beispiel T' = T1.

## Patentansprüche

1. Wäschetrockner mit
einer Trommel (1) zur Aufnahme von zu trocknender Wäsche,
einem Prozesskreislauf zum Führen von erwärmter Prozessluft durch die Trommel (1), zum Abkühlen der Prozessluft zwecks Wasserentzugs und zum Wiederaufheizen der Prozessluft,
einem Wärmepumpenkreislauf zum Führen eines Mediums durch einen Kondensator (3), ein Drosselorgan (5), einen Verdampfer (6) und einen Kompressor (2) zurück zum Kondensator (3), wobei mit dem Kondensator (3) die Prozessluft erwärmbar und mit den Verdampfer (6) die Prozessluft abkühlbar ist, wobei im Wärmepumpenkreislauf ein Zusatzwärmetauscher (4) zum Entziehen von Wärme aus dem Wärmepumpenkreislauf angeordnet ist, und
mit einem Gebläse (7; 18, 19) zum Kühlen des Zusatzwärmetauschers (4) mit Umgebungsluft,
wobei der Zusatzwärmetauscher (4) zwischen dem Kondensator (3) und dem Drosselorgan angeordnet ist, **dadurch gekennzeichnet, dass** die vom Gebläse (7; 18, 19) bewegte Umgebungsluft zuerst durch den Zusatzwärmetauscher (4) und dann um den Kompressor (2) geführt ist, so dass der Kompressor (2) auch gekühlt ist.

2. Wäschetrockner nach Anspruch 1, wobei das Gebläse (7; 18, 19) einen ersten Lüfter (18) und einen zweiten Lüfter (19) aufweist, wobei die Umgebungsluft vom ersten zum zweiten Lüfter gefördert ist, und wobei sie dazwischen den Zusatzwärmetauscher (4) kühlt.

3. Wäschetrockner nach Anspruch 2, wobei die Umgebungsluft zuerst durch den ersten Lüfter (18), dann durch den Zusatzwärmetauscher (4), dann um den Kompressor (2) und schliesslich durch den zweiten Lüfter (19) geführt ist.

4. Wäschetrockner Anspruch 1, wobei das Gebläse (7; 18, 19) einen ersten Lüfter (18) und einen zweiten Lüfter (19) aufweist, wobei die Umgebungsluft vom ersten und vom zweiten Lüfter in das Gerät förderbar ist, insbesondere um den Kompressor (2) von zwei Seiten zu kühlen.

5. Wäschetrockner nach einem der Ansprüche 1 bis 4, wobei das Medium von einer ersten zu einer zweiten Seite durch den Zusatzwärmetauscher (4) geführt ist, derart, dass der Zusatzwärmetauscher (4) auf der ersten Seite heisser als auf der zweiten Seite ist, während die Umgebungsluft von der zweiten zur ersten Seite durch den Zusatzwärmetauscher (4) geführt ist.

6. Wäschetrockner nach einem der Ansprüche 1 bis 5, wobei die Umgebungsluft zum Kühlen des Zusatzwärmetauschers (4) von einer Vorderseite des Wäschetrockners zuführbar ist.

7. Wäschetrockner nach Anspruch 6, wobei in einem Sockel (23) des Wäschetrockners eine Ansaugöffnung (22) vorgesehen ist, durch welche das Gebläse Umgebungsluft ansaugt.

8. Wäschetrockner nach Anspruch 7, wobei zwischen der Ansaugöffnung (22) und dem Zusatzwärmetauscher (4) ein Lüfter (18) des Gebläses angeordnet ist.

9. Wäschetrockner nach Anspruch 7, wobei ein Lüfter (18) des Gebläses zwischen dem Zusatzwärmetauscher (4) und dem Kompressor (2) angeordnet ist.

10. Wäschetrockner nach einem der Ansprüche 1 bis 9, wobei mindestens ein Teil der Umgebungsluft zusätzlich an der Trommel (1) vorbeigeführt ist und diese kühlt.

11. Wäschetrockner nach einem der vorangehenden Ansprüche, wobei ein Bodenbereich des Wäschetrockners in zwei horizontal nebeneinander liegende Bereiche (14, 15) aufgeteilt ist, von denen sich jeder von einer Vorderseite des Wäschetrockners zu einer Rückseite des Wäschetrockners erstreckt, wobei in einem Ersten (14) dieser Bereiche der Kondensator (3) und der Verdampfer (6) angeordnet sind und in einem Zweiten (15) dieser Bereiche der Zusatzwärmetauscher (4) und der Kompressor (2).

12. Wäschetrockner nach Anspruch 11, wobei im zweiten Bereich (15) das Gebläse (7; 18, 19) angeordnet ist.

13. Wäschetrockner nach einem der vorangehenden Ansprüche, wobei an einer Rückseite des Wäschetrockners Entlüftungsöffnungen (27) für vom Gebläse (7; 18, 19) geförderte Luft.

14. Wäschetrockner nach einem der vorangehenden Ansprüche, wobei das Gebläse (7; 18, 19) abhängig von einer Temperatur im Prozesskreislauf und/oder im Wärmepumpenkreislauf gesteuert ist, und insbesondere wobei eine Steuerung vorgesehen ist, welche das Gebläse (7; 18, 19) bei einem Ansteigen der Temperatur mit grösserer Leistung betreibt.

15. Wäschetrockner nach Anspruch 14, wobei das Gebläse (7; 18, 19) abhängig von der Temperatur in mehreren Stufen oder kontinuierlich gesteuert ist.

16. Wäschetrockner nach einem der Ansprüche 14 oder 15, wobei des Gebläse (7; 18, 19) abhängig von einer Temperatur T1 des Mediums zwischen dem Zusatzwärmetauscher (4) und dem Drosselorgan (5) gesteuert ist.

17. Wäschetrockner nach Anspruch 16, wobei eine Leistung des Gebläses (7; 18, 19) abhängig davon erhöht wird, um wieviel die Temperatur T1 über einer Referenztemperatur T0 liegt.

18. Wäschetrockner nach einem der Ansprüche 14 bis 17, wobei das Gebläse (7; 18, 19) abhängig von einer Temperatur T2 des Mediums zwischen dem Verdampfer (6) und dem Kompressor (2) gesteuert ist.

19. Wäschetrockner nach Anspruch 18, wobei das Gebläse (7; 18, 19) abhängig von einer Temperaturdifferenz ΔT = T' - T2 einer Temperatur T' vor oder im Verdampfer und zwischen T2 gesteuert wird, und insbesondere wobei T' = T1.

20. Wäschetrockner nach einem der Ansprüche 16 oder 17 und nach Anspruch 19, wobei die Referenztemperatur T0 abhängig vom Verlauf der Differenz der Temperaturen T1 - T2 und vom Verlauf der Temperatur T2 ist, und insbesondere wobei ein Vergleich der Differenz T1 - T2 mit der Temperatur T2 stattfindet.

21. Wäschetrockner nach einem der Ansprüche 1 bis 20, wobei der Wäschetrockner dazu ausgestaltet ist, während eines Trocknungsprozesses der Wäsche das Gebläse dauernd auf mindestens einer ersten Leistungsstufe zu betreiben.

22. Wäschetrockner nach einem der Ansprüche 1 bis 21, wobei zur Versorgung des Gebläses in mehreren Leistungsstufen ein Nulldurchgangsschalter vorgesehen ist.

## Claims

1. Laundry dryer with
a drum (1) in which to put the laundry to be dried,
a process cycle for conducting heated process air through the drum (1), in order to cool the process air for the purpose of drawing out water and to heat up the process air again,
a heat pump cycle for conducting a medium through a condenser (3), a flow damper (5), an evaporator (6) and a compressor (2) back to the condenser (3), wherein the process air can be heated with the condenser (3) and can be cooled with the evaporator (6), wherein an additional heat exchanger (4) is arranged in the heat pump cycle for taking heat out from the heat pump cycle, and
is arranged with a blower (7; 18, 19) for cooling the additional heat exchanger (4) with ambient air,
wherein the additional heat exchanger (4) is arranged between the condenser (3) and the flow damper, **characterised in that** the ambient air moved by the blower (7; 18, 19) is conducted first through the additional heat exchanger (4) and then around the compressor (2), so that the compressor (2) is also cooled.

2. Laundry dryer according to claim 1, wherein the blower (7; 18, 19) has a first fan (18) and a second fan (19), wherein the ambient air is conveyed from the first fan to the second, and wherein it cools the additional heat exchanger (4) between them.

3. Laundry dryer according to claim 2, wherein the ambient air is conducted initially through the first fan (18), then through the additional heat exchanger (4), then around the compressor (2) and finally through the second fan (19).

4. Laundry dryer according to claim 1, wherein the blower (7; 18, 19) has a first fan (18) and a second fan (19), wherein the ambient air can be conveyed into the device from the first and the second fan, in particular in order to cool the compressor (2) from both sides.

5. Laundry dryer according to one of the claims 1 to 4, wherein the medium is conducted from a first to a second side through the additional heat exchanger (4), in such a way that the additional heat exchanger (4) is hotter on the first side than on the second side, while the ambient air is conducted from the first to the second side by the additional heat exchanger (4).

6. Laundry dryer according to one of the claims 1 to 5, wherein the ambient air for cooling the additional heat exchanger (4) can be introduced from a front side of the laundry dryer.

7. Laundry dryer according to claim 6, wherein an intake opening (22) is arranged in a base (23) of the laundry dryer, through which the blower draws in ambient air.

8. Laundry dryer according to claim 7, wherein a fan (18) of the blower is arranged between the intake opening (22) and the additional heat exchanger (4).

9. Laundry dryer according to claim 7, wherein a fan (18) of the blower is arranged between the additional heat exchanger (4) and the compressor (2).

10. Laundry dryer according to one of the claims 1 to 9, wherein at least one part of the ambient air is additionally diverted onto the drum (1) and cools it.

11. Laundry dryer according to one of the previous claims, wherein a base section of the laundry dryer is divided into two sections (14, 15) that lie horizontally next to each other and each of which extends from a front side of the laundry dryer to a rear side of the laundry dryer, wherein the condenser (3) and the evaporator (6) are arranged in the first (14) of these sections and the additional heat exchanger (4) and the compressor (2) are arranged in the second (15) of these sections.

12. Laundry dryer according to claim 11, wherein the blower (7; 18, 19) is arranged in the second section (15).

13. Laundry dryer according to one of the preceding claims, wherein there are ventilation holes (27) on the rear side of the laundry dryer for air delivered by the blower (7; 18, 19).

14. Laundry dryer according to one of the preceding claims, wherein the blower (7; 18, 19) is controlled in a process cycle and/or in a heat pump cycle depending on a temperature, and in particular wherein control is provided that operates the blower (7; 18, 19) with greater power when the temperature goes up.

15. Laundry dryer according to claim 14, wherein the blower (7; 18, 19) is controlled in several stages or continuously, depending on the temperature.

16. Laundry dryer according to one of the claims 14 or 15, wherein the blower (7; 18, 19) is controlled depending on a temperature T1 of the medium between the additional heat exchanger (4) and the flow damper (5).

17. Laundry dryer according to claim 16, wherein the power of the blower (7; 18, 19) is raised depending on how far the temperature T1 is above a reference temperature T0.

18. Laundry dryer according to one of the claims 14 to 17, wherein the blower (7; 18, 19) is controlled depending on the temperature T2 of the medium between the evaporator (6) and the compressor (2).

19. Laundry dryer according to claim 18, wherein the blower (7; 18, 19) is controlled depending on a temperature difference ΔT = T' - T2 between a temperature T' in front of or in the evaporator and T2, and in particular wherein T' = T1.

20. Laundry dryer according to one of the claims 16 or 17 and according to claim 19, wherein the reference temperature T0 is dependent on the course of the difference between the temperatures T1 - T2 and on the course of the temperature T2, and in particular wherein a comparison takes place between the difference T1 - T2 and the temperature T2.

21. Laundry dryer according to one of the claims 1 to 20, wherein the laundry dryer is set up so that, during a process of drying the laundry, the blower is to be constantly operated at at least a first power level.

22. Laundry dryer according to one of the claims 1 to 21, wherein a zero-crossing switch is provided to supply the blower at several power levels.

## Revendications

1. Sèche-linge comportant
un tambour (1) servant à recevoir le linge à sécher,
un circuit de processus servant à guider l'air de processus chauffé à travers le tambour (1), servant à refroidir l'air de processus aux fins de l'élimination de l'eau et aux fins du réchauffement de l'air de processus,
un circuit de pompe à chaleur servant à ramener un milieu à travers un condensateur (3), un organe d'étranglement (5), un évaporateur (6) et un compresseur (2) vers le condensateur (3), dans lequel l'air de processus peut être chauffé avec le condensateur (3) et l'air de processus peut être refroidi avec l'évaporateur (6), dans lequel un échangeur thermique supplémentaire (4) servant à extraire la chaleur du circuit de pompe à chaleur est disposé dans le circuit de pompe à chaleur, et
une soufflante (7 ; 18, 19) servant à refroidir l'échangeur thermique supplémentaire (4) avec l'air ambiant,
dans lequel l'échangeur thermique supplémentaire (4) est disposé entre le condensateur (3) et l'organe d'étranglement, **caractérisé en ce que** l'air ambiant amené en mouvement par la soufflante (7 ; 18, 19) est guidé tout d'abord à travers l'échangeur thermique supplémentaire (4) puis autour du compresseur (2) de sorte que le compresseur (2) est également refroidi.

2. Sèche-linge selon la revendication 1, dans lequel la soufflante (7 ; 18, 19) présente un premier ventilateur (18) et un deuxième ventilateur (19), dans lequel l'air ambiant est transporté du premier ventilateur au deuxième ventilateur, et dans lequel l'air ambiant refroidit entre-temps l'échangeur thermique supplémentaire (4).

3. Sèche-linge selon la revendication 2, dans lequel l'air ambiant est guidé tout d'abord à travers le premier ventilateur (18), puis à travers l'échangeur thermique supplémentaire (4), puis autour du compresseur (2) et pour finir à travers le deuxième ventilateur (19).

4. Sèche-linge selon la revendication 1, dans lequel la soufflante (7 ; 18, 19) présente un premier ventilateur (18) et un deuxième ventilateur (19), dans lequel l'air ambiant peut être transporté depuis le premier et depuis le deuxième ventilateur dans l'appareil, en particulier pour refroidir deux côtés autour du compresseur (2).

5. Sèche-linge selon l'une quelconque des revendications 1 à 4, dans lequel le milieu est guidé à travers l'échangeur thermique supplémentaire (4) depuis un premier côté vers un deuxième côté, de telle manière que l'échangeur thermique supplémentaire (4) est plus chaud sur le premier côté que sur le deuxième côté, tandis que l'air ambiant est guidé à travers l'échangeur thermique supplémentaire (4) depuis le deuxième côté vers le premier côté.

6. Sèche-linge selon l'une quelconque des revendications 1 à 5, dans lequel l'air ambiant servant à refroidir l'échangeur thermique supplémentaire (4) peut être amené depuis un côté avant du sèche-linge.

7. Sèche-linge selon la revendication 6, dans lequel dans un socle (23) du sèche-linge est prévu un orifice d'aspiration (22), par lequel la soufflante aspire l'air ambiant.

8. Sèche-linge selon la revendication 7, dans lequel un ventilateur (18) de la soufflante est disposé entre l'orifice d'aspiration (22) et l'échangeur thermique supplémentaire (4).

9. Sèche-linge selon la revendication 7, dans lequel un ventilateur (18) de la soufflante est disposé entre l'échangeur thermique supplémentaire (4) et le compresseur (2).

10. Sèche-linge selon l'une quelconque des revendications 1 à 9, dans lequel au moins une partie de l'air ambiant longe en outre le tambour (1) et refroidit ce dernier.

11. Sèche-linge selon l'une quelconque des revendications précédentes, dans lequel une zone de fond du sèche-linge est divisée en deux zones (14, 15) juxtaposées horizontalement, chacune d'elles s'étendant depuis un côté avant du sèche-linge vers un côté arrière du sèche-linge, dans lequel le condensateur (3) et l'évaporateur (6) sont disposés dans une première zone (14) desdites zones et l'échangeur thermique supplémentaire (4) et le compresseur (2) sont disposés dans la deuxième zone (15) desdites zones.

12. Sèche-linge selon la revendication 11, dans lequel la soufflante (7 ; 18, 19) est disposée dans la deuxième zone (15).

13. Sèche-linge selon l'une quelconque des revendications précédentes, dans lequel des orifices d'aération (27) destinés à l'air transporté par la soufflante (7 ; 18, 19) sont disposés au niveau d'un côté arrière du sèche-linge.

14. Sèche-linge selon l'une quelconque des revendications précédentes, dans lequel la soufflante (7 ; 18, 19) est commandée en fonction d'une température dans le circuit de processus et/ou dans le circuit de pompe à chaleur, et en particulier dans lequel une commande est prévue, laquelle fait fonctionner la soufflante (7 ; 18, 19) à une puissance plus importante lors d'une hausse de la température.

15. Sèche-linge selon la revendication 14, dans lequel la soufflante (7 ; 18, 19) est commandée en fonction de la température dans plusieurs niveaux ou en continu.

16. Sèche-linge selon l'une quelconque des revendications 14 ou 15, dans lequel la soufflante (7 ; 18, 19) est commandée en fonction d'une température T1 du milieu entre l'échangeur thermique supplémentaire (4) et l'organe d'étranglement (5).

17. Sèche-linge selon la revendication 16, dans lequel une puissance de la soufflante (7 ; 18, 19) est augmentée en fonction de la valeur, de laquelle la température T1 est supérieure à une température de référence T0.

18. Sèche-linge selon l'une quelconque des revendications 14 à 17, dans lequel la soufflante (7 ; 18, 19) est commandée en fonction d'une température T2 du milieu entre l'évaporateur (6) et le compresseur (2).

19. Sèche-linge selon la revendication 18, dans lequel la soufflante (7 ; 18, 19) est commandée en fonction d'une différence de température ΔT = T' - T2 entre une température T' avant et dans l'évaporateur et une température T2, en particulier dans lequel T' = T1.

20. Sèche-linge selon l'une quelconque des revendications 16 ou 17 et selon la revendication 19, dans lequel la température de référence T0 dépend de la variation de la différence entre les températures T1 - T2 et de la variation de la température T2, et en particulier dans lequel une comparaison entre la différence T1 - T2 et la température T2 a lieu.

21. Sèche-linge selon l'une quelconque des revendications 1 à 20, dans lequel le sèche-linge est configuré pour faire fonctionner de manière durable la soufflante sur au moins un premier niveau de puissance au cours du processus de séchage du linge.

22. Sèche-linge selon l'une quelconque des revendications 1 à 21, dans lequel est prévu un commutateur de passage par zéro aux fins de l'alimentation de la soufflante dans plusieurs niveaux de puissance.
